Europäisches Patentamt

European Patent Office

Office européen des brevets

(19)

(11) Publication number: **0 138 066**
**B1**

(12) **EUROPEAN PATENT SPECIFICATION**

(45) Date of publication of patent specification: **25.05.88**

(51) Int. Cl.⁴: **B 65 G 33/00**

(21) Application number: **84110915.0**

(22) Date of filing: **12.09.84**

(54) Modular screw conveyor.

(30) Priority: **29.09.83 US 537345**

(43) Date of publication of application:
**24.04.85 Bulletin 85/17**

(45) Publication of the grant of the patent:
**25.05.88 Bulletin 88/21**

(84) Designated Contracting States:
**DE FR GB IT**

(56) References cited:
**EP-A-0 082 899**
**DE-A-1 556 639**
**FR-A-1 580 350**
**US-A-3 705 644**

(73) Proprietor: **The Laitram Corporation**
**220 Laitram Lane**
**Harahan Louisiana 70123 (US)**

(72) Inventor: **Lapeyre, James M.**
**13 Richmond Place**
**New Orleans Louisiana, 70150 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the invention

This invention relates to a module for a screw conveyor composed of a plurality of mated modules, each module being integrally molded and comprising:

a central tube having first and second ends;

a helical web disposed around the outer surface of the central tube and integrally attached thereto;

the ends of the central tube and the ends of the helical web having means integral therewith and cooperative with corresponding means on adjacent modules to provide helical screw conveying surfaces disposed around an effectively continuous central tube.

The invention also relates to a screw conveyor composed of a plurality of modules in accordance with the invention.

### Background of the invention

Screw conveyors are well known for the transport of bulk material. Such conveyors generally include a helical screw disposed within a housing, often of trough-like form, and rotatable about its longitudinal axis to cause propulsion of bulk material along the length of the screw. Conveyors of known construction are usually fabricated of metal and are constructed to an intended finished size to provide a conveyor of intended length. Screw conveyors have also been constructed of modular or segmented form to provide sections which can be assembled into a complete conveyor of a desired length. Examples of segmented or modular conveyors are shown in US—A— 347 233, 525 194, 1 867 573, 2394 163, 2 492 915 and 3 178 210.

A module for a screw conveyor of the type mentioned in the beginning is known from EP—A—82899. This module does not provide a fully continuous conveying surface in a conveyor composed of a plurality of modules, and the assembled modules do not form a strong continuous conveying screw because they are more or less strung together on a shaft and/or connected by screw springs which do not provide for a strong connection between the modules.

Furthermore, from DE—A—1 556 639 there is known a module for a screw conveyor composed of a plurality of mated modules, each module comprising a tubular body having first and second ends, a central shaft coaxially disposed within the tubular body, a helical web disposed between the inner surface of the tubular body and the outer surface of the central shaft and integrally attached to the outer surface of the central shaft with the ends of the tubular body having means integral therewith and cooperative with corresponding means on adjacent modules to provide internal helical screw conveying surfaces disposed within an effectively continuous tubular body. This module consists of two separate main parts, namely a tubular body and helical web integral with a central shaft. And the helical web of several modules do not form a continuous surface. Therefore, this module and the screw conveyor composed of such modules are complicated and do not convey on continuous conveying surfaces as desirable. Moreover, it is complicated to assemble the modules because they must be connected one to the other by means of screws which are to be inserted through holes in the ends of each module shaft.

### Summary of the invention

The present invention provides a module of the type mentioned in the beginning, which is characterized in that the helical web extends axially outward of the confronting ends of the central tube; and the ends of the helical web each include a surface for confronting a similar surface of a mated end of an adjacent module.

The present invention also provides a screw conveyor composed of a plurality of such modules.

Preferably the ends of the body and coaxial tube are configured to sealingly engage like ends of mated modules, and the respective ends of the helical web include surfaces mateable with corresponding surfaces of like modules. The modules are axially mated to form a conveyor of desired length, the mated modules being retained in engagement by a tensile member such as a rod disposed through the aligned openings of the coaxial tubes and operative to provide an intended compressive force on the engaged modules. Alternatively, the modules can be secured in engagement by other means such as flanges on the ends of the body. The module body, coaxial tube, and helical web are integrally molded of a suitable plastic material, typically by an injection molding process. Each module may include a sheave integrally formed with the body and which is composed of a plurality of spaced segments to define a V-groove configured to mate with a V-belt of an exterior drive. Alternatively, sprocket teeth may be integrally formed with the module body to mate with a chain drive, or other driving means can be employed.

In one embodiment, the helical web is integrally formed within a surrounding tube which provides a self-enclosure for the helical screw. In another embodiment, the conveyor of the present invention is in open form in which the module comprises a central tube preferably having a non-circular opening, about which the helical web is integrally molded. The ends of the central tube and ends of the web are mateable with the ends of like modules to provide a conveyor of desired length.

In some of the embodiments of the screw conveyor in accordance with the present invention, the modules are retained in compressive engagement by a tensile member such as a shaft of non-circular cross-section extending through the aligned non-circular openings of the central tubes, the rod also serving as a torsional drive shaft for the mated modules. This open type of screw conveyor driven by a central shaft is adapted to be readily retrofitted to existing conveyor systems which presently employ conventional metal conveyor screws.

The molded plastic conveyor of this invention offers major benefits over screw conveyors of conventional construction. The assembled modules offer smooth effectively continuous surfaces throughout the length of the conveyor with no hardware or other obstructions along the conveying surfaces. The novel conveyor is easily cleaned and can be molded of a variety of materials compatible with and suitable for particular operational purposes. The conveyor is not subject to rust or corrosion, as with many metal conveyors, and is of much less weight than a metal conveyor of the same size. The modular construction allows a single unitary module to be manufactured and stocked for assembly as necessary to achieve conveyors of different lengths. The modules can be easily shipped to an installation site and assembled on site for use. The conveyor can also be readily disassembled into its component modules such as for cleaning, shipping, or repair.

Further developments of the invention are defined by the dependent claims.

Description of the drawings

The invention will be more fully understood from the following detailed description taken in conjunction with the accompanying drawings, in which:

Fig. 1 is a pictorial view of a screw conveyor module embodying the invention;

Fig. 2 is an end view of the module of Fig. 1;

Fig. 3 is a sectional view taken along lines 3—3 of Fig. 2;

Fig. 4 is a pictorial view of an embodiment similar to that of Fig. 1 and including an integrally molded sheave thereon;

Fig. 5 is an end view of the module of Fig. 4;

Fig. 6 is a sectional view taken along lines 6—6 of Fig. 5;

Fig. 7 is a sectional side view of a screw conveyor embodying the invention and composed of the modules of Figs. 1—3;

Fig. 8 is a cutaway side view of a module having alternative mounting means;

Fig. 9 is a sectional elevation view of a further embodiment of a screw conveyor module of the invention;

Fig. 10 is an end view of the module of Fig. 9;

Fig. 11 is a side view of a screw conveyor embodying the invention and composed of the modules of Figs. 9 and 10; and

Fig. 12 is a pictorial view of a further embodiment of a screw conveyor module of the invention.

Detailed description of the invention

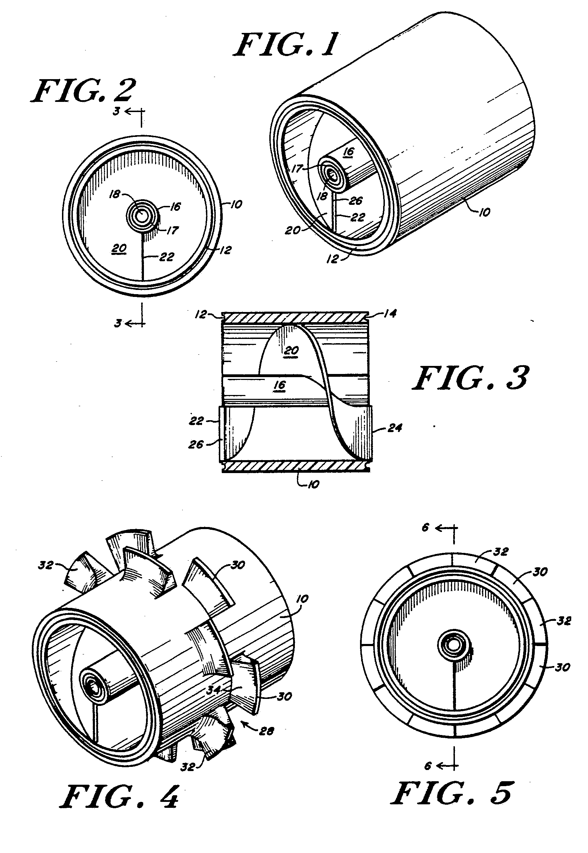

Referring to Figs. 1—3 of the drawing, there is shown an integrally molded module which is mateable with like modules to form a screw conveyor of intended length. The module is molded of a suitable plastic material such as polyethylene, polypropylene or polyurethane and has integrally formed therewith all essential constituents of the screw conveyor. The module includes a body 10 of tubular configuration having on the ends thereof circular grooves 12 and 14, respectively, for accommodation of an O-ring seal between mated modules. A tube 16 is coaxially disposed within body 10 and having an opening 18 extending therethrough, with a web 20 helically disposed between the inner surface of body 10 and outer surface of tube 16. The tube 16 includes on the respective ends thereof circular grooves 17 for accommodation of an O-ring seal. The web 20 is slightly less than one helical pitch length terminating in respective ends 22 and 24 which include axially parallel surfaces 26 adapted to confront corresponding surfaces of like modules. Thus, the surface 26 of helix end 22 is adapted to confront the oppositely facing edge of end 24 of an adjacent module. The web ends extend outward of the confronting ends of body 10 typically by approximately 1/2 the well thickness of the web, as illustrated. By having the length of the helical web slightly less than the helical pitch it is possible to injection mold the module by conventional molding techniques since as seen from Fig. 2 the two halves of an injection mold can open axially of the module which, because its helical length is slightly less than one helical pitch, presents no undercuts to the mold halves. Typically, the web length is about one percent less than the pitch length to provide sufficient clearance for mold tooling.

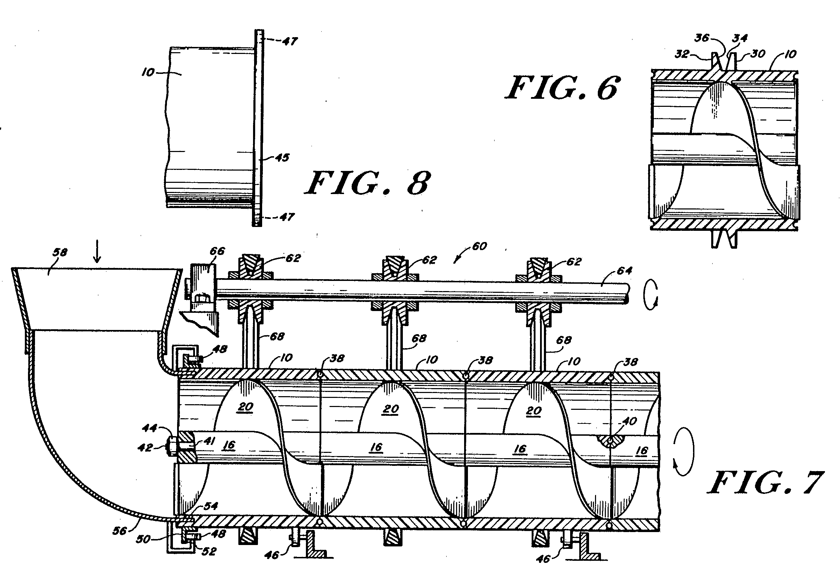

An embodiment similar to that of Figs. 1—3 is shown in Figs. 4—6 and includes a sheave integrally molded with the conveyor module. The sheave 28 is provided around the body 10 centrally disposed between the respective ends of the body, the sheave being composed of alternating segments. A first array of segments 30 is disposed around the body 10 in spaced circumferential arrangement. A second array of segments 32 is axially spaced from the segments 30 and is circumferentially disposed about body 10 in spaced position staggered from the position of the segments 30, as illustrated. The confronting surfaces 34 and 36 of respective segments 30 and 32 define a V-groove, best seen in Fig. 6, configured to mate with a V-belt of an exterior drive. The module is otherwise the same as described above with respect to Figs. 1—3. The staggered arrangement of the segments 30 and 32 allow injection molding by conventional injection molding techniques since the staggered arrangement as seen from Figs. 4—5 permits the mold halves to open axially of the module and present no undercuts to the mold halves.

The module of Figs. 1—3 is axially mated with like modules, as shown in Fig. 7, to form a conveyor of desired length. Each of the modules is aligned with the ends of adjacent bodies 10 in engagement with an interposed O-ring 38, and with the ends of adjacent tubes 16 in engagement with an interposed O-ring 40. The helical webs 20 have their edges confronting to provide an effectively continuous helical screw disposed within the continuous tubular body formed by the mated modules. Since the web is slightly less than one helical pitch length, small spaces exist between the confronting web ends of mated modules. Typically, the gap between confronting web ends is about 0.1 inch for a web of eight inch diameter. The small spaces between the confronting ends of the helical web are of little consequence to the ability of the assembled screw to convey most products.

The small spaces may be filled in with material which is the same as or compatible with that of the module. For example, molded strips of plastic material can be inserted into the small spaces between web ends and fused therein, such as by hot gas welding, to produce a helical web having fully continuous surfaces. The elimination of the small gaps is useful in some applications such as where sanitary conditions require. For most conveying purposes, the small spaces are not of any consequence.

The mated modules are maintained in engagement by a tensile member 41 disposed within the openings 18 of tubes 16. This member typically is a metal rod 41 having threaded ends 42 and fasteners 44 which are tightened to provide an intended compressive force on the engaged modules. Alternatively, the tensile member can be a wire, plastic, or other rope disposed within the openings 18 of tubes 16 and tensioned by appropriate fasteners on the respective ends of the rope. In cases where the conveyor is subject to changes in temperature, it would be preferable to have a tensile member which allows for expansion and contraction of the conveyor while maintaining the axial compressive force on the mated modules. The tensile member should be of a material having thermal expansion and contraction characteristics in relation to those of the modules to maintain a compressive load on the mated modules even during temperature cycling.

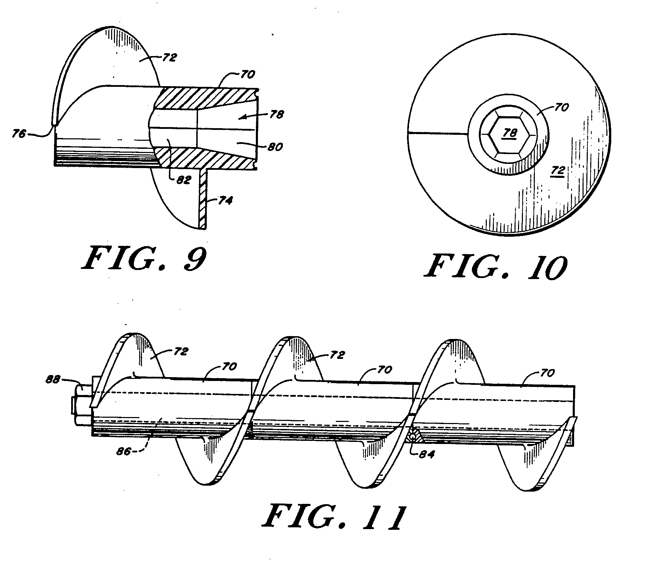

The modules can alternatively be secured together by means other than a tensile member. One such alternative is illustrated in Fig. 8 in which the body 10 includes on each end thereof an integral flange 45 having openings 47 disposed about the circumference of the flange and through which fasteners are insertable for securing mated ends together.

The mated modules may be supported for rotation on rollers 46. Typically, an array of three circumferentially spaced rollers is provided near each end of the conveyor body. Additional rollers can be provided as necessary, depending upon the length of the particular conveyor. Axial positioning of the conveyor body is maintained by horizontally disposed rollers 48 at each end of the body, these rollers being circumferentially spaced about the periphery of the body. A flange 50 is attached to the end modules of the conveyor and includes a circular surface 52 which is cooperative with the rollers 48 to maintain the axial position of the rotatable body. A slip seal can be machined or otherwise formed in the outer end of the outermost module. In the illustrated embodiment, the slip seal is in the form of an annular groove 54 into which an end of a feed tube 56 is inserted, and with respect to which the conveyor body is rotatable. The feed tube 56 is typically connected to a hopper 58 into which a product is fed (as shown by the arrow) for conveyance.

The drive assembly 60 includes sheaves 62 carried by and rotatable with a shaft 64 which is supported on bearing blocks 66 and which is driven by a motor (not shown). The shaft 64 is spaced from and parallel to the conveyor body, and each sheave 62 may be in association with a respective conveyor module. V-belts 68 couple the drive sheaves 62 to the conveyor modules and by which power is transmitted to the conveyor body for rotation thereof. In the illustrated embodiment, each of the modules is driven by an associated conveyor belt coupled to the drive assembly. All of the conveyor modules need not be driven, and the driven number will be determined in accordance with the motive force necessary to rotate the conveyor for particular applications.

If the modules of Figs. 4—6 are employed, the sheaves 28 are operative to engage the V-belts 68 for driving the conveyor. It is appreciated that the conveyor can be driven by other than V-belts. For example, chain sprockets can be formed on or attached to the modules for cooperation with a chain drive.

Another embodiment of the invention is shown in Figs. 9 and 10 and includes a screw conveyor module having a central tube 70 of cylindrical exterior form, with a non-circular opening therethrough and with a web 72 helically disposed about the central tube. The helical web is slightly less in length than one helical pitch length, as described, and terminates at edges 74 and 76, these edges being adapted to confront corresponding edges of adjacent modules. The opening 78 through the central tube is of non-circular cross-section at end portions 80 and tapers to a non-circular cross-section at a central portion 82. This tapering is slight and is provided as "draft angle" to facilitate removal of the module from axially separable molds. The opening is configured to mate with a non-circular shaft which serves as a tensile member to lock the modules into axial engagement and which also serves as a positive drive shaft for rotation of the conveyor. In the embodiment of Figs. 9 and 10, the opening is illustrated as hexagonal, although other noncircular shaped openings can be provided in tube 70 for use with a correspondingly shaped shaft to prevent rotation of the engaged modules relative to the shaft.

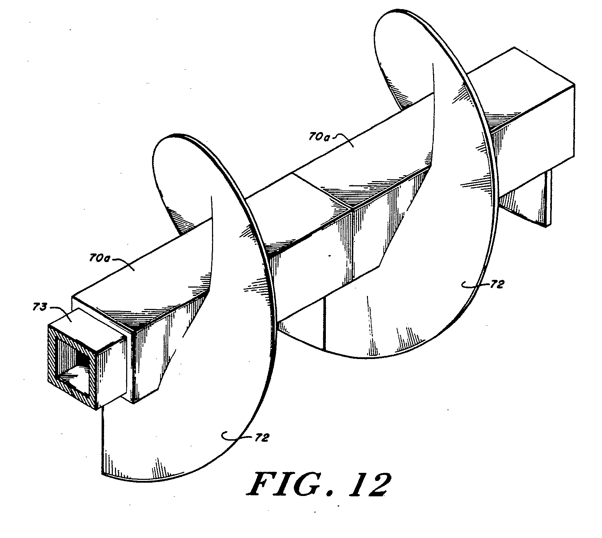

A module of alternative implementation is shown in Fig. 12 and includes a central tube 70a of square cross section and about which the helical web 72a is formed. The modules are assembled onto a square shaft 73 cooperative with the openings of tubes 70a.

A screw conveyor composed of the modules of Figs. 9 and 10 is shown in Fig. 11. Each of the modules is aligned with the ends of adjacent central tubes 70 in engagement with an interposed O-ring 84, and with the helical webs 72 having their ends confronting to provide an effectively continuous helical screw. A shaft 86 is fitted through the openings 80 through the tubes 70 and is secured by end fasteners, such as nuts 88 threaded onto threaded ends of shaft 86, which are tightened to provide an intended compressive force on the interconnected modules, as described above. This embodiment of Fig. 11 can be employed to retrofit existing metal screw conveyors without material change to the drive system.

The invention is not to be limited by what has been particularly shown or described except as indicated in the appended claims.

## Claims

1. A module for a screw conveyor composed of a plurality of mated modules, each module being integrally molded and comprising:

a central tube (16, 70, 70a) having first and second ends;

a helical web (20, 72) disposed around the outer surface of the central tube (16, 70, 70a) and integrally attached thereto;

the ends of the central tube (16, 70, 70a) and the ends (22, 24, 74, 76) of the helical web (20, 72) having means (17, 26) integral therewith and cooperative with corresponding means (17, 26) on adjacent modules to provide helical screw conveying surfaces disposed around an effectively continuous central tube;

characterized in that the helical web (20, 72) extends axially outward of the confronting ends of the central tube (16, 70, 70a); and

the ends (22, 24, 27, 74, 76) of the helical web (20, 72) each include a surface (26) for confronting a similar surface (26) of a mated end (22, 24, 74, 76) of an adjacent module.

2. The module of claim 1, characterized by a tubular body (10) encircling the helical web (20) and having first and second ends;

the ends of the tubular body having means (12, 24) integral therewith and cooperative with corresponding means (12, 24) on adjacent modules to provide internal helical screw conveying surfaces disposed within an effectively continuous tubular body.

3. The module of Claim 2, characterized in that the central tube (16) has ends generally coextensive with the respective ends of the tubular body (10).

4. The module of Claim 1 or 3, characterized in that the ends of the central tube (16, 70, 70a) include a circular groove (17) in each end for accommodation of a ring seal (40, 84).

5. The module of Claim 2, characterized in that the ends of the tubular body (10) include a circular groove (12, 14) in each end for accommodation of a ring seal (38).

6. The module of Claim 1 or 2, characterized in that the surface (26) on one end (22, 24, 74, 76) of the helical web (20, 72) is oppositely facing the surface (26) on the other end (22, 24, 74, 76) of the helical web (20, 72) such that each surface (26) of the helical web (20, 72) is mateable with an oppositely facing surface (26) of a mated adjacent module.

7. The module of any one of Claims 1, 2 or 6, characterized in that the helical web (20, 72) is of approximately one helical pitch length.

8. The module of any one of Claims 1, 2 or 6, characterized in that the helical web (20, 72) is slightly less than one helical pitch length.

9. The module of Claim 1 or 2, characterized in that the central tube (16, 70, 70a) includes an opening (18, 78) extending therethrough for the accommodation of a tensile member (41, 86) operative to interconnect a plurality of mated modules.

10. The module of Claim 9, characterized in that the opening (18, 78) in the central tube (16, 70, 70a) is of non-circular cross-section.

11. The module of Claim 2, characterized by a sheave (28) integrally formed on the tubular body (10) and operative to mate with a drive belt (68).

12. The module of Claim 11, characterized in that the sheave (28) comprises a plurality of alternating segments (30, 32) each integrally molded with and upstanding from the outer surface of the tubular body (10) and arranged in spaced array to define a V-groove configured to mate with a V-belt (68).

13. The module of Claim 11, characterized in that the sheave (28) is comprised of a first array of segments (30) disposed around the tubular body (10) in spaced circumferential arrangement;

a second array of segments (32) axially spaced from the first array of segments (30) and circumferentially disposed about the tubular body (10) in spaced circumferential position staggered from the position of the segments (30) of the first array;

the first and second array of segments (30, 32) defining a V-groove configured to mate with a V-belt (68).

14. The module of Claim 2, characterized in that the tubular body (10) includes means (45, 47) on the ends thereof and integral with the body (10) and cooperative with like means (45, 47) on mated modules to secure the modules together (Figure 8).

15. The module of Claim 9, characterized in that the opening (78) of the central tube (70) is tapered.

16. A screw conveyor composed of a plurality of modules, characterized in that it is composed of modules according to any one of Claims 1 to 5.

17. A screw conveyor composed of a plurality of modules as claimed in Claim 1 or 2, characterized in that

(a) said central tube (16, 70, 70a) includes an opening (18, 78) extending therethrough for accommodation of a tensile member (41, 86) operative to interconnect a plurality of mated modules;

(b) a tensile member (41, 86) extends through the openings (18, 78) of the mated modules; and

means (42, 44, 88) are provided for securing the tensile member (41, 86) to the mated modules to maintain the modules in compressive mated engagement.

18. The screw conveyor of Claim 17, composed of a plurality of modules as claimed in Claim 2, characterized in that at least one of the modules includes a sheave (28) as claimed in any one of Claims 11, 12 or 13.

19. The screw conveyor of Claim 17 of a plurality of modules as claimed in Claim 2, characterized in that it further includes means (46) for supporting said mated modules for rotation about this axis of the helical web (20).

20. The screw conveyor of Claim 19, characterized in that it further includes means (54) for coupling a feed tube (56) to an end of the mated modules.

21. The screw conveyor of Claims 19 and 20, characterized in that it further has at least one drive belt (68) mated with a sheave (28) on at least one of the tubular bodies (10).

22. The screw conveyor of Claim 17, characterized in that the openings (18, 78) of the central tube (16, 70, 70a) is of non-circular cross-section.

**Patentansprüche**

1. Modul für einen Schneckenförderer, der aus einer Mehrzahl von vereinigten Modulen zusammengesetzt ist, wobei jedes Modul integral geformt ist und folgendes umfaßt:
ein mittiges Rohr (16, 70, 70a), das ein erstes und zweites Ende hat;
einen spiralförmigen Steg (20, 72), der um die äußere Oberfläche des mittigen Rohrs (16, 70, 70a) herum angeordnet und integral daran angebracht ist;
wobei die Enden des mittigen Rohrs (16, 70, 70a) und die Enden (22, 24, 74, 76) des spiralförmigen Stegs (20, 72) Mittel (17, 26) haben, die integral damit sind und mit entsprechenden Mitteln (17, 26) auf benachbarten Modulen dahingehend zusammenwirken, daß spiralförmige Schneckenförderoberflächen zur Verfügung gestellt werden, die um ein effektiv kontinuierliches mittiges Rohr herum angeordnet sind;
dadurch gekennzeichnet,
daß sich der spiralförmige Steg (20, 72) axial auswärts von den gegenüberstehenden Enden des mittigen Rohrs (16, 70, 70a) erstreckt; und
die Enden (22, 24, 74, 76) des spiralförmigen Stegs (20, 72) je eine Oberfläche (26) zum Gegenüberstehen einer entsprechenden Oberfläche (26) eines vereinigten Endes (22, 24, 74, 76) eines benachbarten Moduls aufweisen.

2. Modul nach Anspruch 1, gekennzeichnet durch einen rohrförmigen Körper (10), der den spiralförmigen Steg (20) umgibt und ein erstes und zweites Ende hat;
wobei die Enden des rohrförmigen Körpers Mittel (12, 24) haben, die integral damit und zusammenwirkend mit entsprechenden Mitteln (12, 24) auf benachbarten Modulen sind, so daß sie interne spiralförmige Schneckenförderoberflächen zur Verfügung stellen, die innerhalb eines effektiv kontinuierlichen rohrförmigen Körpers angeordnet sind.

3. Modul nach Anspruch 2, dadurch gekennzeichnet, daß das mittige Rohr (16) Enden hat, die generell koextensiv mit den jeweiligen Ende des rohrförmigen Körpers (10) sind.

4. Modul nach Anspruch 1 oder 3, dadurch gekennzeichnet, daß die Enden des mittigen Rohrs (16, 70, 70a) eine kreisförmige Nut (17) in jedem Ende zur Aufnahme einer Ringdichtung (40, 84) aufweisen.

5. Modul nach Anspruch 2, dadurch gekennzeichnet, daß die Ende des rohrförmigen Körpers (10) eine kreisförmige Nut (12, 14) in jedem Ende für die Aufnahme einer Ringdichtung (38) aufweisen.

6. Modul nach Anspruch 1 oder 2, dadurch gekennzeichnet daß die Oberfläche (26) auf einem Ende (22, 24, 74, 76) des spiralförmigen Stegs (20, 72) der Oberfläche (26) auf dem anderen Ende (22, 24, 74, 76) des spiralförmigen Stegs (20, 72) derart gegenüberliegenden zugewandt ist, daß jeder Oberfläche (26) des spiralförmigen Stegs (20, 72) mit einer gegenüberliegenden zugewandten Oberfläche (26) eines vereinigten benachbarten Moduls vereinbar ist.

7. Modul nach irgendeinem der Ansprüche 1, 2 oder 6, dadurch gekennzeichnet, daß der spiralförmige Steg (20, 72) von angenähert einer Spiralganghöhenlänge ist.

8. Modul nach irgendeinem der Ansprüche 1, 2 oder 6, dadurch gekennzeichnet, daß der spiralförmige Steg (20, 72) ein wenig weniger als eine Spiralganghöhenlänge ist.

9. Modul nach Anspruch 1 oder 2, dadurch gekennzeichnet, daß das mittige Rohr (16, 70, 70a) eine Öffnung (18, 78) aufweist, die sich durch dasselbe hindurch zur Aufnahme eines Spannteils (41, 86) erstreckt, das dahingehend operativ ist, daß es eine Mehrzahl von vereinigten Modulen miteinander verbindet.

10. Modul nach Anspruch 9, dadurch gekennzeichnet, daß die Öffnung (18, 78) in dem mittigen Rohr (16, 70, 70a) von nichtkreisförmigem Querschnitt ist.

11. Modul nach Anspruch 2, gekennzeichnet, durch eine Rillenscheibe (28), die integral auf dem rohrförmigen Körper (10) ausgebildet und dahingehend operativ ist, daß sie sich mit einem Antriebsriemen (68) vereinigt.

12. Modul nach Anspruch 11, dadurch gekennzeichnet, daß die Rillenscheibe (28) eine Mehrzahl von alternierenden Abschnitten (30, 32) umfaßt, von denen jeder integral mit der äußeren Oberfläche des rohrförmigen Körpers (10) geformt und von dieser aufrecht steht, und die in einer Abstandsanordnung angeordnet sind, so daß sie eine V-Nut bilden, die so konfiguriert ist, daß sie sich mit einem V-Riemen (68) vereinigt.

13. Modul nach Anspruch 11, dadurch gekennzeichnet, daß die Rillenscheibe (28) aus einer ersten Anordnung von Abschnitten (30) besteht, die in einer umfangsmäßigen Abstandsanordnung um den rohrförmigen Körper (10) herum angeordnet sind;

eine zweite Anordnung von Abschnitten (32), die axial im Abstand von der ersten Anordnung von Abschnitten (30) ist und umfangsmäßig um den rohrförmigen Körper (10) in beabstandeter Umfangsposition versetzt gegenüber der Position der Abschnitte (30) der ersten Anordnung angeordnet ist;

wobei die erste und zweite Anordnung von Abschnitten (30, 32) eine V-Nut bilden, die so konfiguriert ist, daß sie sich mit einem V-Riemen (68) vereinigt.

14. Modul nach Anspruch 2, dadurch gekennzeichnet, daß der rohrförmige Körper (10) Mittel (45, 47) auf den Enden desselben und integral mit dem Körper (10) sowie zusammenwirkend mit entsprechenden Mitteln (45, 47) auf vereinigten Modulen zum Befestigen der Module aneinander aufweist (Fig. 8).

15. Modul nach Anspruch 9, dadurch gekennzeichnet, daß die Öffnung (78) des mittigen Rohrs (70) kegelförmig ist.

16. Schneckenförderer, der aus einer Mehrzahl von Modulen zusammengesetzt ist, dadurch gekennzeichnet, daß er aus Modulen gemäß irgendeinem der Ansprüche 1 bis 5 zusammengesetzt ist.

17. Schneckenförderer, der aus einer Mehrzahl von Modulen zusammengesetzt ist, die in Anspruch 1 oder 2 beansprucht sind, dadurch gekennzeichnet, daß

(a) das mittige Rohr (16, 70, 70a) eine Öffnung (18, 78) aufweist, die sich durch dasselbe zur Aufnahme eines Spannteils (41, 86) erstreckt, das dahingehend operativ ist, daß es eine Mehrzahl von vereinigten Modulen miteinander verbindet;

(b) sich ein Spannteil (41, 86) durch die Öffnungen (18, 78) der vereinigten Module erstreckt; und

Mittel (42, 44, 88) zum Befestigen des Spannteils (41, 86) an den vereinigten Modulen vorgesehen sind, um die Module in kompressivem vereinigten Eingriff zu halten.

18. Schneckenförderer nach Anspruch 17, der aus einer Mehrzahl von Modulen zusammengesetzt ist, wie sie in Anspruch 2 beansprucht sind, dadurch gekennzeichnet, daß wenigstens eines der Module eine Rillenscheibe (28) aufweist, wie sie in irgendeinem der Ansprüche 11, 12 oder 13 beansprucht ist.

19. Schneckenförderer nach Anspruch 17 aus einer Mehrzahl von Modulen, wie sie in Anspruch 2 beansprucht sind, dadurch gekennzeichnet, daß er weiter Mittel (46) zum Halten der vereinigten Module für eine Rotation um diese Achse des spiralförmigen Stegs (20) aufweist.

20. Schneckenförderer nach Anspruch 19, dadurch gekennzeichnet, daß er weiter Mittel (54) zum Ankoppeln eines Speiserohrs (56) an ein Ende der vereinigten Module aufweist.

21. Schneckenförderer nach den Ansprüchen 19 und 20, dadurch gekennzeichnet, daß er weiter wenigstens einen Antriebsriemen (68) hat, der mit einer Rillenscheibe (28) auf wenigstens einem der rohrförmigen Körper (10) vereinigt ist.

22. Scheckenförderer nach Anspruch 17, dadurch gekennzeichnet, daß die Öffnung (18, 78) des mittigen Rohrs (16, 70, 70a) von nichtkreisförmigem Querschnitt ist.

**Revendications**

1. Module destiné à un transporteur à vis composé de plusieurs modules coopérant, chaque module étant moulé en une seule pièce et comprenant:

un tube central (16, 70, 70a) ayant une première et une seconde extrémité,

une spire d'hélice (20, 72) disposée autour de la surface externe du tube central (16, 70, 70a) et fixée à celui-ci en étant solidaire,

les extrémités du tube central (16, 70, 70a) et les extrémités (22, 24, 74, 76) de la spire d'hélice (20, 72) ayant des dispositifs (17, 26) qui en sont solidaires et qui coopèrent avec des dispositifs correspondants (17, 26) portés par les modules adjacents afin que des surfaces hélicoîdales de transport de vis soient placées autour d'un tube central pratiquement continu,

caractérisé en ce que la spire d'hélice (20, 72) dépasse axialement vers l'extérieur des extrémités en regard du tube central (16, 70, 70a), et les extrémités (22, 24, 74, 76) de la spire d'hélice (20, 72) ont chacune une surface (26) destinée à être en face d'une surface semblable (26) d'une extrémité coopérante (22, 24, 74, 76) d'un module adjacent.

2. Module selon la revendication 1, caractérisé par un corps tubulaire (10) entourant la spire d'hélice (20) et ayant une première et une seconde extrémité,

les extrémités du corps tubulaire ayant des dispositifs (12, 24) qui en sont solidaires et qui coopèrent avec des dispositifs correspondants (12, 24) de modules adjacents afin que les modules forment des surfaces hélicoîdales internes de transport disposées dans un corps tubulaires pratiquement continu.

3. Module selon la revendication 2, caractérisé en ce que le tube central (16) a des extrémités dont la position correspond de façon générale à celle des extrémités respectives du corps tubulaire (10).

4. Module selon l'une des revendications 1 et 3, caractérisé en ce que les extrémités du tube central (16, 70, 70a) comportent une gorge circulaire (17) à chaque extrémité, pour le logement d'un joint annulaire (40, 84).

5. Module selon la revendication 2, caractérisé en ce que les extrémités du corps tubulaire (10) ont une gorge circulaire (12, 14) à chaque extrémité, pour le logement d'un joint annulaire (38).

6. Module selon l'une des revendications 1 et 2, caractérisé en ce que la surface (26) d'une première extrémité (22, 24, 74, 76) de la spire d'hélice (20, 72) est disposée en face de la surface (26) de l'autre extrémité (22, 24, 74, 76) de la spire d'hélice (20, 72) de manière que chaque surface (26) de la spire d'hélice (20, 72) puisse coopérer avec une surface (26) placée en regard, appartenant à un module adjacent coopérant.

7. Module selon l'une quelconque des revendications 1, 2 et 6, caractérisé en ce que la spire d'hélice (20, 72) a une longueur approximativement égale à un pas.

8. Module selon l'une quelconque des revendications 1, 2 et 6, caractérisé en ce que la spire d'hélice (20, 72) a une longueur légèrement inférieure au pas de l'hélice.

9. Module selon l'une des revendications 1 et 2, caractérisé en ce que le tube central (16, 70, 70a) a une ouverture (18, 78) qui le traverse et qui est destinée à loger un organe de traction (41, 86) destiné à raccorder plusieurs modules coopérant.

10. Module selon la revendication 9, caractérisé en ce que l'ouverture (18, 78) formée dans le tube central (16, 70, 70a) a une section non circulaire.

11. Module selon la revendication 2, caractérisé par un réa (28) formé solidairement sur le corps tubulaire (10) et destiné à coopérer avec une courroie (68) d'entraînement.

12. Module selon la revendication 11, caractérisé en ce que le réa (28) a plusieurs segments (30, 32) qui alternent et qui sont moulés chacun solidairement avec la surface externe du corps tubulaire (10) dont ils dépassent perpendiculairement et disposés sous forme d'un arrangement espacé délimitant une gorge en V dont la configuration lui permet de coopérer avec une courroie trapézoîdale (68).

13. Module selon la revendication 11, caractérisé en ce que le réa (28) est formé d'un premier arrangement de segments (30) placé autour du corps tubulaire (10) sous forme d'un arrangements circonférentiel de segments espacés,

un second arrangement de segments (32) distant axialement du premier arrangement de segments (30), les segments étant disposés circonférentiellement autour du corps tubulaire (10) à des emplacements circonférentiels espacés et décalés par rapport aux positions des segments (30) du premier arrangement,

le premier et le second arrangement de segments (30, 32) délimitant une gorge trapézoîdale ayant une configuration leur permettant de coopérer avec une courroie trapézoîdale (68).

14. Module selon la revendication 2, caractérisé en ce que le corps tubulaire (10) comporte un dispositif (45, 47) placé sur ses extrémités et solidaire du corps (10), ce dispositif étant destiné à coopérer avec une dispostif analogue (45, 47) de modules coopérant de manière que les modules soient fixés mutuellement (figure 8).

15. Module selon la revendication 9, caractérisé en ce que l'ouverture (78) du tube central (70) a une section qui varie progressivement.

16. Transporteur à vis composé de plusieurs modules, caractérisé en ce qu'il est composé de modules selon l'une quelconque des revendications 1 à 5.

17. Transporteur à vis composé de plusieurs modules selon l'une des revendications 1 et 2, caractérisé en ce que

(a) le tube central (16, 70, 70a) a une ouverture (18, 78) qui le traverse et destinée à loger un organe de traction (41, 86) dont le rôle est de raccorder plusieurs modules coopérant,

(b) un organe de traction (41, 86) est disposé dans les ouvertures (18, 78) des modules coopérant, et

un dispositif (42, 44, 88) est destiné à fixer l'organe de traction (41, 86) sur les modules coopérant afin qu'il maintienne les modules en coopération par application d'une force de compression.

18. Transporteur à vis selon la revendication 17, composé de plusieurs modules selon la revendication 2, caractérisé en ce que l'un des modules au moins comporte un réa (28) tel que revendiqué dans l'une quelconque des revendications 11, 12 et 13.

19. Transporteur à vis selon la revendication 17, comprenant plusieurs modules selon la revendication 2, caractérisé en ce qu'il comporte en outre un dispositif (46) destiné à supporter les modules coopérant afin qu'il tournent autour de l'axe de la spire d'hélice (20).

20. Transporteur à vis selon la revendication 19, caractérisé en ce qu'il comporte en outre un dispositif (54) destiné à raccorder un tube (56) d'alimentation à une extrémité des modules coopérant.

21. Tranporteur à vis selon l'une des revendications 19 et 20, caractérisé en ce qu'il a en outre au moins une courroie d'entraînement (68) coopérant avec un réa (28) formé sur l'un au moins des corps tubulaires (10).

22. Transporteur à vis selon la revendication 17, caractérisé en ce que les ouvertures (18, 78) du tube central (16, 70, 70a) ont une section non circulaire.

FIG. 1

FIG. 2

FIG. 3

FIG. 4

FIG. 5

FIG. 8

FIG. 6

FIG. 7

0 138 066

FIG. 9

FIG. 10

FIG. 11

70a

70a

73

72

72

*FIG. 12*